# EUROPEAN PATENT SPECIFICATION

(11) **EP 4 457 748 B1**
(45) Date of publication and mention of the grant of the patent: **26.08.2026**
(21) Application number: 22704878.2
(22) Date of filing: 26.01.2022
(51) Int. Cl.: G06T 5/50, G06T 5/60, G06T 7/33

(54) **HDR RECONSTRUCTION FROM BRACKETED EXPOSURES AND EVENTS**
HDR-REKONSTRUKTION AUS GEBÜNDELTEN BELICHTUNGEN UND EREIGNISSEN
RECONSTRUCTION HDR À PARTIR D'EXPOSITIONS BRACKETÉES ET D'ÉVÉNEMENTS

(43) Date of publication of application: 06.11.2024
(73) Proprietor: Huawei Technologies Co., Ltd., Shenzhen, Guangdong 518129 (CN)
(72) Inventor: PEREZ PELLITERO, Eduardo, 80992 Munich (DE); LEONARDIS, Ales, 80992 Munich (DE); SHAW, Richard, 80992 Munich (DE)
(74) Representative: Gill Jennings & Every LLP
(86) International application number: PCT/EP2022/051716
(87) International publication number: WO 2023/143708

(56) References cited:
- CN-A- 112 396 562
- ZHEN LIU ET AL: "ADNet: Attention-guided Deformable Convolutional Network for High Dynamic Range Imaging", ARXIV.ORG, CORNELL UNIVERSITY LIBRARY, 201 OLIN LIBRARY CORNELL UNIVERSITY ITHACA, NY 14853, 22 May 2021 (2021-05-22), XP081968012
- LIN WANG ET AL: "Deep Learning for HDR Imaging: State-of-the-Art and Future Trends", ARXIV.ORG, CORNELL UNIVERSITY LIBRARY, 201 OLIN LIBRARY CORNELL UNIVERSITY ITHACA, NY 14853, 2 November 2021 (2021-11-02), XP091092740

## Description

### FIELD OF THE INVENTION

This invention relates to high dynamic range (HDR) images, for example for generating spatially aligned event-based image features compatible with image-based features to be used in the generation of HDR images.

### BACKGROUND

Dynamic range in images is defined as the ratio between the maximum and minimum measurable light intensities, white and black light, respectively. The human visual system has a very broad dynamic range. In other words, humans can perceive details in very bright and very dark scenes. However, cameras may struggle to capture such richness of details due to the nature of their photoreceptors. The sensor of a camera may be composed by photosites. The photosites may provide "light cavities" which produce an electric signal when photons "fall" into them.

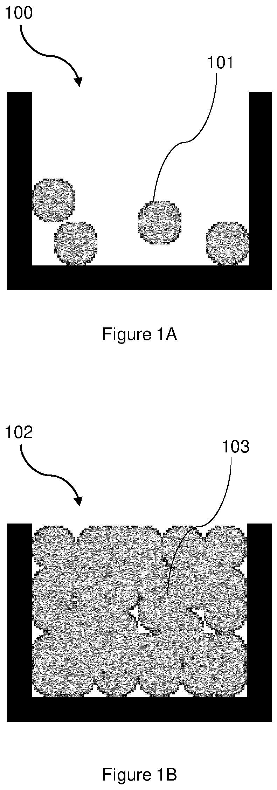

Due to the inherent noise level in the signal, there may be a minimum number of photons each cavity can detect, and thus this may set the "minimum" light which may be measured by the camera. Figure 1A schematically illustrates the minimum measurable light due to the sensor noise level 100. The minimum number of photons 101 are shown.

At the other end of the luminosity scale, when there may be too many electrons falling into the photolites, the photolites may overflow and saturate. This may effectively set the maximum measurable light, i.e. white colour. Figure 1B schematically illustrates the maximum measurable light due to overflowing photosite 102. The maximum number of photons 103 are shown.

Any luminosity present in the scene outside of this range, would be under or over exposed with a single exposure value. In these parts of the scene, the luminosity may be lost.

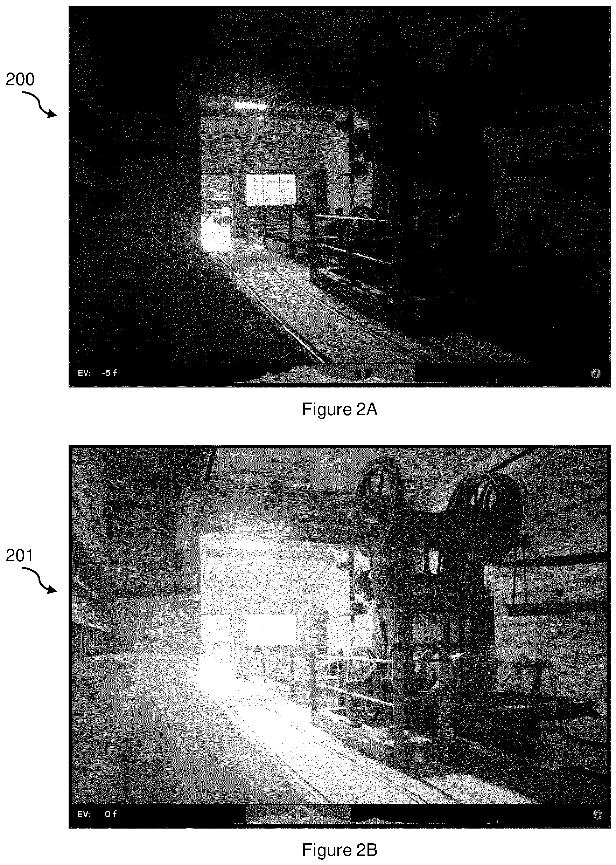

If the luminosity of the scene is at different exposure values in different frames, this may enable the details of the scene to be revealed. Figure 2A shows an example input image 200 with areas that are under-exposed. Figure 2B shows an example input image 201 with areas that are over-exposed. The other areas in Figure 2A and Figure 2B may be well-exposed.

Figures 2A and 2B show different exposure values photographs of the same scene. In Figure 2A, the bright details around the windows and doors are revealed, but the back of the room is under-exposed. In Figure 2B, the region around the windows and doors is over-exposed but details in the back of the room are well exposed. A combination of the frames in Figure 2A and Figure 2B may enable the details of the scene in the frame to be revealed.

The current dynamic range of known cameras may not be able to capture all the details present in high contrast scenes. To overcome this, for a given static camera and scene, several low dynamic range (LDR) frames may be captured with different exposure values and merged via a weighted fusion. This is known as automatic exposure bracketing (AEB), enabling the resulting image to retain details present in all input images, thus effectively increasing the dynamic range. The final image is called a high dynamic range (HDR) image.

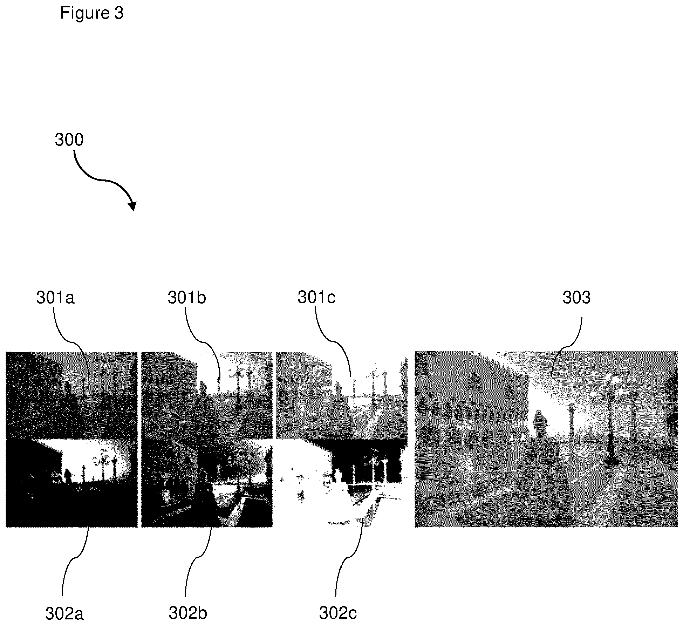

Figure 3, taken from Mertens et al., Exposure Fusion, Pacific Conference on Computer Graphics and Applications, 2007, shows three low dynamic range (LDR) frames, 301a, 301b, 301c, which are used to generate the HDR image 303. 302a, 302b, 303c show the weight maps corresponding to the LDR frames 301a, 301b, 301c.

Capturing several frames with different exposure values may be achieved by altering the capture parameters that regulate the amount of light captured by the camera, i.e. lens aperture (also denote f-number), exposure time, sensor gain or ISO.

A key challenge of AEB may be during implementation with dynamic scenes. If there is movement between the sequence of captured exposures (either camera motion or scene motion) the images must be spatially aligned to the reference frame (usually chosen to be the middle frame). If there is misalignment between the frames, motion-related artefacts can appear in the final HDR reconstructed image.

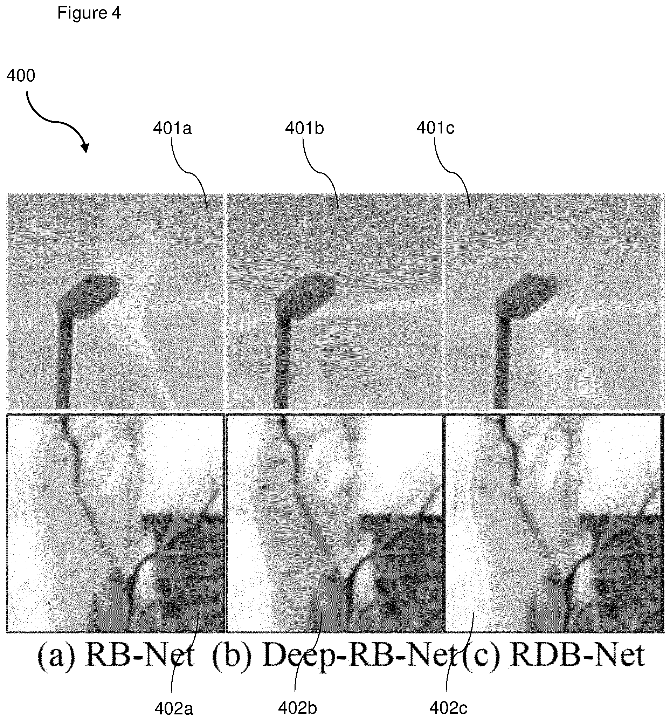

Figure 4, taken from Q. Yan et al., Attention-guided Network for Ghost-free High Dynamic Range Imaging, 2019, shows the examples of misalignment between frames. Motion-related artefacts (ghosting) caused by movement between the bracketed exposures can be seen in the frames of a first image 401a, 401b, 401c, and the frames of the second image 402a, 402b, 402c. State-of-the-art networks for AEB HDR have attempted to address this issue but may still suffer from artefacts in very challenging dynamic scenes.

The main limitations of AEB may include: (i) limited dynamic range per exposure which may make alignment of the LDRs difficult, (ii) motion related artefacts (ghosting / double edges / edge-bleeding), and (iii) temporal resolution sacrifice which in effect decimates the temporal resolution by 3 (for 3 input exposures).

Event-based cameras (EBC) are a bio-inspired type of imaging sensor that may help to solve the issues with traditional image-based HDR methods, such as AEB.

An EBC may only capture motion in the scene. The sensor may contain independent asynchronous pixels, and their advantages include: (i) high temporal resolution and low latency (both in the order of microseconds), (ii) very high dynamic range (140 dB vs 60 dB of standard cameras), and (iii) low power consumption.

In contrast to standard cameras, which acquire full images at a rate specified by an external clock (e.g. 30 fps), event cameras respond to brightness changes in the scene asynchronously and independently for every pixel. Thus, the output of an event camera may be a variable data-rate sequence of binary "events" or "spikes", with each event representing a change of brightness (log intensity) of predefined magnitude at a pixel at a particular time.

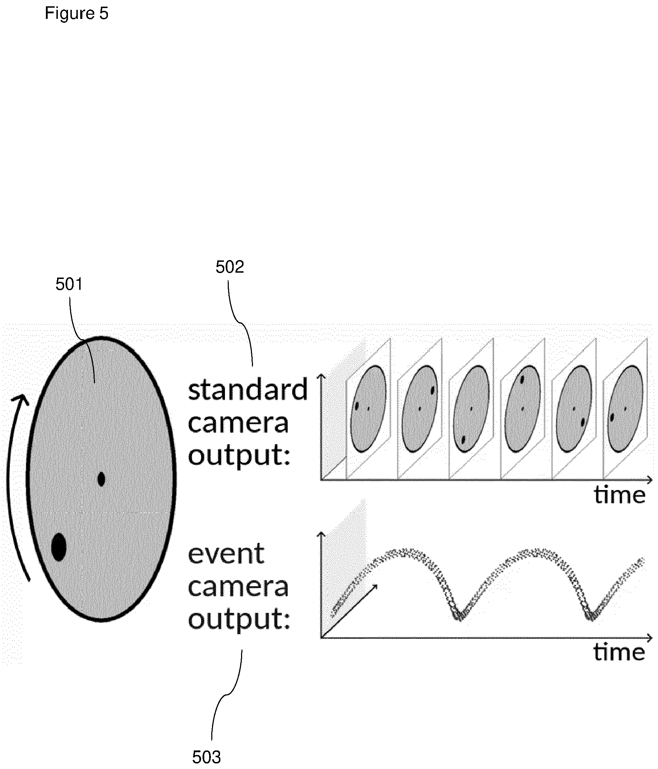

Figure 5, taken from Gehrig et al., EKLT: Asynchronous Photometric Feature Tracking Using Events and Frames, International Journal of Computer Vision, 2019, illustrates the difference between a standard frame-based camera and an event-based camera (EBC). A standard camera 502 captures every frame of the spinning disk 501, whereas the EBC 503 only captures the pixels that are moving.

The event camera's independent pixels respond to changes in their log photocurrent *L* = log(*I*) ("brightness"). An event *eᵢ* = (*x,y,t,p*) is triggered at a pixel location (*x, y*) and at timestamp *t* with polarity *p*, as soon as the brightness increment since the last event at that pixel (given by Equation 1) reaches a threshold (given by Equation 2). $Δ L \left(x, y, t\right) = L \left(x, y, t\right) - L \left(x,y,Δt\right)$ $Δ L \left(x, y, t\right) = pC$

C is termed the contrast threshold and *p* ∈ {-1, +1} is the polarity of the event, i.e. indicating whether the brightness went up or down since the previous event. Not all event cameras capture the event polarity, and some EBCs may only detect whether an event occurred or not, while others capture the actual pixel intensity of the event. The detection may depend on the particular type of EBC that is used.

The prior art for the present system may be separated into two categories: i) image-based HDR and ii) event-based HDR.

Prior art in image-based HDR methods may attempt to reconstruct an HDR image either from a single low dynamic range (LDR) image or from multiple LDR images captured with different exposures (bracketed exposures), typically captured with staggered equally-spaced exposure values.

Multi-frame exposure methods generally outperform single image methods, as a single LDR image contains limited dynamic range (~60 dB). As such, information in the over or under-exposed regions may need to be hallucinated, for instance, using a neural network.

Bracketed exposure methods may perform better by leveraging information from a broader range of input exposures. However, since these exposures are captured sequentially, they may suffer from motion-related artefacts, particularly in scenes containing fast motion. Furthermore, due to the limited dynamic range of each LDR, saturated image regions may make the alignment of bracketed exposures challenging.

State-of-the-art methods (e.g. AHDRNet, ADNet etc.) use attention modules to suppress the misaligned and under- or over-exposed regions of the input LDRs. In the case of ADNet, the LDRs may be spatially aligned to the reference frame using a pyramidal deformable convolution (PCD) alignment module in the feature domain. The features may then be fused and based through a residual network backbone to reconstruct the HDR image. While these architectures may do well at suppressing ghosting artefacts, they may still fail for images containing saturated regions and large displacements between bracketed exposures.

Prior art in event-based HDR methods usually attempt to reconstruct intensity images from streams of raw event data alone, i.e. that is the task of recovering an intensity image from a sequence of binary events *E =* (*x,y, timestamp, polarity*)*.* However, state-of-the-art solutions may be poor in quality (~30 dB PNSR). They are typically limited to grayscale reconstructions (as most event cameras do not capture colour information) and are of low resolution (the resolution of the Celepixel event camera is only 720x800 pixels).

In Rebecq et al., High Speed and High Dynamic Range Video with an Event Camera, 2020, TPAMI, it is attempted to reconstruct grayscale video from streams of event data using a recurrent neural network. However, the quality of the reconstructions may be below that obtained from image-based methods, suffering severe temporal artefacts, lack of detail, and complete reconstruction failure when there is no motion. The method may also not explicitly predict linear HDR image frames and instead only 8-bit tonemapped images are predicted. The method may claim high dynamic range purely by virtue of using an event-based camera as input.

Han et al., Neuromorphic Camera Guided High Dynamic Range Imaging, 2020, CVPR attempts to combine a single LDR image with event data for the task of HDR image reconstruction. However, the method may only use a single exposure LDR image from a conventional frame-based camera and input events in the form of an intensity map, either outputted by the event-based camera itself (some event cameras can capture image intensity frames and events simultaneously) or reconstructed using a neural network such as E2Vid. The results of the method may still be poor. The method does not appear to exploit the temporal nature of events by only using a single intensity map as input. Furthermore, the method also appears to fail in scenes with no motion as when there is no event signal the network may resort to reconstructing from a single LDR input alone. This may perform worse than bracketed exposure methods.

Image-based HDR may have the following advantages: high pixel count, high-quality optics, accurate colour representation, and fine detail reconstruction.

Image-based HDR may have the following disadvantages: limited dynamic range per exposure (~60 dB), motion related artefacts (ghosting/double edges), and temporal resolution sacrifice (effective temporal resolution is decimated x3).

Event-based HDR may have the following advantages: higher temporal resolution (~10 µs), higher dynamic range (140 dB vs 60 dB), ultra-low power (1mWvs 1W), and no motion blur.

Event-based HDR may have the following disadvantages: SOTA results are generally poor quality (as shown in Han et al., Neuromorphic Camera Guided High Dynamic Range Imaging, 2020, CVPR, results of only ~30 dB PSNR), grayscale output, low resolution (e.g. DAVIS 346 event camera is only 346 x 260 pixels), information only in moving regions such as temporal artefacts and so if there is no motion there is no signal, and fine detail is difficult to reconstruct.

It is desirable to develop an apparatus and method that overcomes the above problems.

CN112396562A discloses techniques that belong to the field of robot perception, and particularly that relate to a disparity map enhancement method based on RGB and DVS image fusion in a high dynamic range scene. The method comprises the following steps: S1, deploying a binocular RGB camera and a DVS camera, and calibrating the binocular RGB camera and the DVS camera; S2, collecting an RGB image and a DVS image of a binocular camera in a scene, and performing multi-scale weighted fusion after registration; S3, generating an HDR image for computer vision for the fused image; and S4, based on the HDR image generated in the step S3, using an improved binocular stereo matching algorithm SGM to generate a disparity map. In a scene with a large imaging dynamic range such as a tunnel, the problems of under exposure and high exposure of a camera are solved, the quality of a generated image is improved, and meanwhile, for the problems of discontinuity and instability of an image edge region, edge detail information is enriched as much as possible by introducing other information sources, and the accuracy of the finally generated disparity map at the edge of the image is improved.

Lin Wang et al., "Deep Learning for HDR Imaging: State-of-the-Art and Future Trends", Cornell University Library, 201 Olin Library Cornell University Ithaca, NY 14853 indicates on page 12 that the feasibility of directly fusing image and event data was an outstanding question at the time of authoring this document.

### SUMMARY

According to a first aspect, there is provided an imaging apparatus according to appended claim 1By spatially aligning the event-based image features to one or more image features of the reference LDR image to generate spatially aligned event-based image features, the spatially aligned event-based image features may be generated in dependence on the image features from the LDR images. This may provide event features which are based on the image feature for use in generating a HDR image.

The apparatus is configured to generate an HDR image in dependence on the spatially aligned event-based image features. This may enable the HDR image to include combination of the event features and the image features, in which the event features are aligned to the image features. This may provide an improved HDR image estimation.

The apparatus is configured to extract the one or more image features from the LDR images. This may provide the image features for the transformation of the event features.

The apparatus is configured to extract the one or more event features from the segments of the event stream in dependence on the one or more image features from the LDR images. This may allow the extraction to target particular parts of the event stream based on the image features.

In some implementations, the apparatus may be configured to transform the one or more event features into image features to generate event-based image features in dependence on the one or more image features from the LDR images.

In some implementations, the apparatus may be configured to transform the one or more event features into image features to generate event-based image features in dependence on self-supervision from the one or more image features from the LDR images. This may allow the transformation to be taught towards the LDR image features.

In some implementations, the apparatus may be configured to extract the one or more event features from the segments of the event stream by means of a neural network. The neural network may provide a means for training the extraction of the event features.

In some implementations, the apparatus may be configured to temporally subsample the segments of the event stream. This may allow the segments of the event stream to be broken down for the mixed-modality module to assess and compare to the LDR image features.

In some implementations, the apparatus may be configured to extract the one or more event features from the subsamples of the segments of the event stream that are in the same feature space as the one or more image features from the LDR images. This may allow the subsampling to the targeted towards the parts of the LDR images in which the image features are present.

In some implementations, the apparatus may be configured to extract one or more further event features from the segments of the event stream not in dependence on the one or more image features from the LDR images and spatially align the further event features to one or more image features of the reference LDR image. This may allow further event features to be generated that are independent of the LDR image features. In this way, the estimation of the HDR image may be based on a wider range of event features.

In some implementations, the apparatus may be configured to obtain the event stream and wherein the apparatus is configured to generate the two or more segments of the event stream by converting the event stream into two or more voxel grids. This may convert the event stream into a format that can be understood by the event pipeline neural networks.

In some implementations, the apparatus may be configured to extract the one or more image features from the LDR images by means of a neural network. The neural network may provide a means for training the extraction of the image features.

In some implementations, the apparatus may be configured to spatially align any misaligned or saturated image features from the LDR images to one or more image features of the reference LDR image by suppressing the misaligned or saturated image features. This may provide further image features to be used in the estimation of the HDR image.

In some implementations, the apparatus may be configured to transform the two or more LDR images to the linear domain by means of a gamma-correction operation. The gamma correction may optimise the usage of bits when encoding the LDR images 605.

In some implementations, the apparatus may be configured to extract one or more gamma-corrected image features from the gamma-corrected LDR images by means of a neural network. The neural network may provide a means for training the gamma-correction of the image features.

In some implementations, the apparatus may be configured to spatially align the gamma-corrected image features to one or more image features of the reference LDR image. This may provide further image features to be used in the estimation of the HDR image.

In some implementations, the apparatus may be configured to combine the spatially aligned event-based image features with one or more of the spatially aligned further event features, the spatially aligned misaligned or saturated image features, and the spatially aligned gamma-corrected image features. This may provide further image features to be used in the estimation of the HDR image.

In some implementations, the apparatus may be configured to generate the HDR image in dependence on the combination of the spatially aligned event-based image features with one or more of the spatially aligned further event features, the spatially aligned misaligned or saturated image features, and the spatially aligned gamma-corrected image features. This may provide further image features to be used in the estimation of the HDR image.

In some implementations, the apparatus may be configured wherein the two or more LDR images are each captured using different bracketed exposure levels. This may provide a range of levels of exposure in the LDR images to combine and generate the HDR image from.

According to a second aspect, there is proved a computer implemented method for imaging according to appended claim 10 By spatially aligning the event-based image features to one or more image features of the reference LDR image to generate spatially aligned event-based image features, the spatially aligned event-based image features may be generated in dependence on the image features from the LDR images. This may provide event features which are based on the image feature for use in generating a HDR image.

According to a third aspect, there is provided a computer program product according to appended claim 11.

According to a fourth aspect, there is provided a non-transitory computer-readable medium according to appended claim 12.

### BRIEF DESCRIPTION OF THE FIGURES

The present invention will now be described by way of example with reference to the accompanying drawings. In the drawings:
Figure 1A schematically illustrates the minimum measurable light due to the sensor noise level. Figure 1B schematically illustrates the maximum measurable light due to overflowing photosite.
Figure 2A shows an example input image with areas that are under-exposed. Figure 2B shows an example input image with areas that are over-exposed.
Figure 3 shows three example LDR input image frames, three corresponding weight maps and an output HDR image.
Figure 4 shows two HDR images generated by three different AEB methods.
Figure 5 schematically illustrates the output of a moving image from a standard camera and an event camera.
Figure 6 schematically illustrates the pipeline of a first exemplary imaging apparatus.
Figure 7 schematically illustrates the pipeline of a second exemplary imaging apparatus.
Figure 8 schematically illustrates the network design of an exemplary event feature extractor.
Figure 9 schematically illustrates the network design of an exemplary event alignment module.
Figure 10 schematically illustrates the network design of an exemplary mixed-modality processor.
Figure 11A schematically illustrates the network design of a first exemplary feature fusion module. Figure 11B schematically illustrates the network design of a second exemplary feature fusion module.
Figure 12 schematically illustrates the network design of an HDR enhancement module.
Figure 13 illustrates an example of an apparatus configured to perform the methods described herein.
Figure 14 illustrates an example method for generating spatially aligned event-based image features.
Figure 15 illustrates the quantitative results of a HdM HDR dataset for the present system compared to the prior art.
Figure 16 illustrates the qualitative results of a HdM HDR dataset for the present system compared to the prior art and ground truth.

### DETAILED DESCRIPTION

The apparatus and method described herein concern generating HDR images. In particular, the apparatus and method concern generating spatially aligned event-based image features to be used in the generation of HDR images.

Embodiments of the present system may tackle one or more of the problems previously mentioned by spatially aligning the event-based image features to one or more image features of the reference LDR image to generate spatially aligned event-based image features. In this way, the spatially aligned event-based image features may be generated in dependence on the image features from the LDR images. This may provide event features which are based on the image feature for use in generating a HDR image.

The present system may solve the problem of capturing and estimating an HDR image, especially addressing the difficulties induced by dynamic scenes, by means of an artificial intelligence (AI) multi-modal camera system that leverages both bracketed exposures from a conventional frame-based camera and events from an event-based camera.

The present system may do so by processing the input events and input bracketed exposure images with a neural network pipeline. The pipeline may process the input events and images with separate image and event processing modules, and also jointly with a mixed-modality module. The output features of each processing module may be fused together and passed through an HDR enhancement module.

In particular, the inputs to the present system may include a sequence of staggered LDR images with bracketed exposures (e.g. short: -3ev, medium: 0ev, long: +3ev) with corresponding timestamps (t1, t2, t3), and a simultaneously captured event stream captured from times t0 to t3, where t0 is some time before the first LDR capture t1. In other words, the input include (i) a sequence of staggered LDR images captured with bracketed exposure values, and (ii) a stream of event data captured by an event-based camera. The output of the present system may include one or more HDR images.

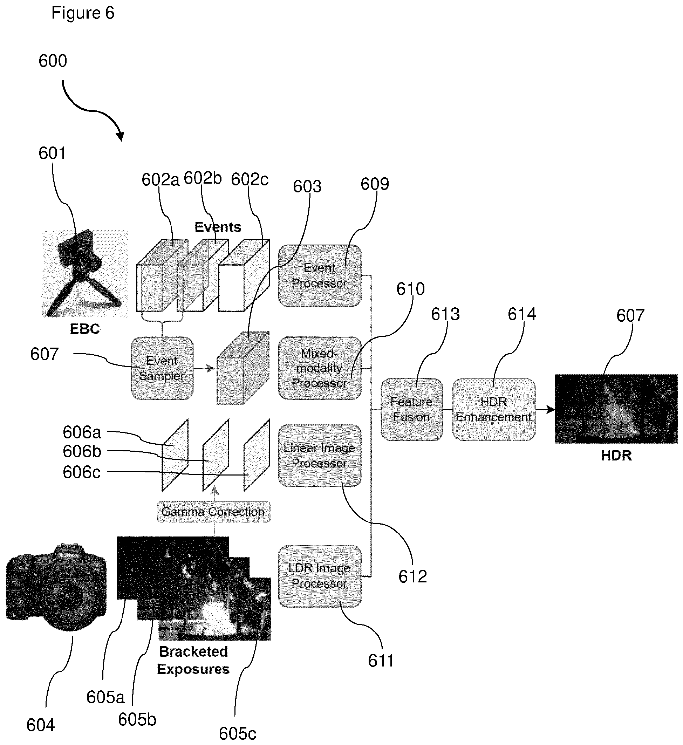

Figure 6 schematically illustrates the pipeline of a first exemplary imaging apparatus.

In summary, the pipeline may consist of a number of separate modules. The input images and events may be processed through separate modules and also jointly through a mixed-modality module 610. The bracketed input images 605 may processed with the LDR image processor 611. The input LDR images 605 may be converted to the linear image domain through gamma correction and processed with a linear image processor 612. The input events may be processed with the event processor 609. Subsamples of events may be processed with the 610 mixed-modality processor which may transform them into the linear image feature domain.

The pipeline 600 may comprise different input streams. The exemplary pipeline 600 shown in Figure 6 comprises 4 input streams. In the first input stream, an event-based camera 601 may feed into an event processor 609. In the second input stream, an event sampler 607, fed by the event-based camera 601, may feed into a mixed-modality processor 610. In the third input stream, an image-based camera 604 may feed into an LDR image processor 611. In the fourth input stream, the image-based camera may feed into a linear-image processor 612 through a gamma correction function.

The different input streams 600 of the pipeline may be combined into a single output stream. The output stream may comprise a feature fusion module 613 which feeds into an HDR enhancement module 614. The HDR enhancement module 614 may output a HDR image 607.

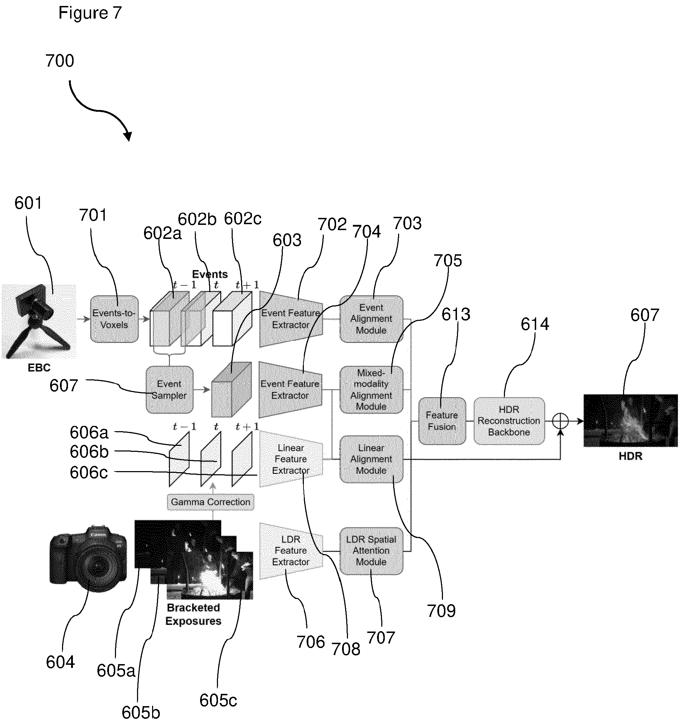

Figure 7 schematically illustrates the pipeline of a second exemplary imaging apparatus. The pipeline 700 may comprise a more detailed illustration of the first exemplary imaging apparatus pipeline 600.

In particular, the first input stream may further comprise a events-to-voxels module 701 implemented between the event-based camera 601 and the event processor 609. The event processor 609 may further comprise an event feature extractor 702 which feeds an event alignment module 703. The mixed-modality processor 610 may further comprise an event feature extractor 704 which feeds a mixed-modality alignment module 705. The LDR image processor 611 may further comprise an LDR feature extractor 706 which feeds an LDR spatial attention module 707. The linear image processor 612 may further comprise a linear feature extractor 708 which feeds a linear alignment module 709.

The apparatus as described herein may be implemented on either of the pipelines 600, 700. The steps that the apparatus carries out may be implemented on the different processors and modules which are described herein. Alternatively, the apparatus described herein may be implemented on other suitable pipelines. Each of the modules and processors may be implemented as neural networks.

The apparatus may be configured obtain two or more LDR images 605. The LDR images 605 may be captured by the apparatus. For example, the images may be captured by a frame-based camera. The described apparatus may be implemented on such a frame-based camera. The frame-based camera may comprise a digital single-lens reflex (DSLR) camera, a mirrorless camera, and/or a smartphone camera. Alternatively, the apparatus may be configured to receive the two or more LDR images from a separate apparatus, such as a separate image-based camera as described herein.

The LDR images 605 may be captured using different bracketed exposure levels. Each of the LDR image 605 may be captured using different bracketed exposure levels. In other words, as shown in the exemplary embodiment in Figures 6 and 7, the apparatus may obtain three 5a, LDR images 605a, 605b, 605c. Preferably, a minimum of three LDR images 605a, 605b, 605c are captured. However, a suitable HDR image 607 may be generated using two or more LDR images 605. Each of the three LDR images 605a, 605b, 605c may have been captured using different bracketed exposure levels. The middle, or average bracketed exposure level may be designated as the reference LDR image 605b. This motion of the event in the reference LDR image 605b may be used for generating the eventual HDR image 607.

The LDR images 605a, 605b, 605c may be in sequence. The bracketed exposures of the LDR images 605a, 605b, 605c may be denoted as ev-, ev0, ev+. The corresponding sequential timestamps of the LDR images 605a, 605b, 605c may be denoted as t1, t2, t3. Further bracketed exposures and timestamps may be used if further LDR images 605, in addition to the exemplary three LDR images 605a, 605b, 605c, are used.

The apparatus may be configured to obtain an event stream. The apparatus may be configured to receive an event stream. The event stream may be a continuous stream that is captured at the same time as the LDR images 605 are captured. The event stream may be captured by the apparatus. For example, the event stream may be captured by an event-based camera. The described apparatus may be implemented on such an event-based camera. The event-based camera may comprise a CeleX camera, a DAVIS camera, and/or a DVS camera. Alternatively, the apparatus may be configured to receive the event stream from a separate apparatus, such as a separate event-based camera as described herein.

The apparatus may be configured to obtain two or more segments 602 of the event stream. Figures 6 and 7 show three segments 602a, 602b, 602c of the event stream. Preferably, the segments 602a, 602b, 602c may correspond to the LDR images 605a, 605b, 605c. In other words, the number of segments 602a, 602b, 602c may correspond to the number of LDR images 605a, 605b, 605c. Additionally, the timing of the segments 602a, 602b, 602c may correspond to the timing of LDR images 605a, 605b, 605c. In this way, the event captured in the segments 602a, 602b, 602c may correspond to the event captured in the LDR images 605a, 605b, 605c.

The apparatus may be configured to generate two or more segments 602 of the event stream. The apparatus may be configured to generate the two or more segments 602 of the event stream by converting the event stream into two or more voxel grids. The voxel grids may provide a suitable structure for use in the apparatus, in particular as it may provide a 3 dimensional structure which may include x,y coordinates and time coordinates. The conversion of the event stream into the voxel grids, or segments 602, may be carried out by the events-to-voxels module 701. Alternatively, the apparatus may be configured to receive the segments 602 of the event stream from a separate apparatus, such as a separate event-based camera as described herein.

The apparatus may be configured to extract one or more image features from the LDR images 605. The image features may comprise sections, regions, or characteristics of the LDR image 605 descriptive of the well-exposed information present within each differently-exposed LDR image, and extract temporal and spatial cues that are optimal for the HDR reconstruction stage 614. Additionally or alternatively, the image features may comprise sections, or regions of the LDR image 605 in which the features are of low or high saturation, the features move between LDR images 605a, 605b, 605c, or the features comprise other deformities.

The apparatus may be configured to extract the one or more image features from the LDR images 605 by means of a neural network.

Referring to Figures 6 and 7, the LDR feature extractor 706, of the LDR image processor 611, may be configured to receive the LDR images 605. The LDR feature extractor 706 may be configured to extract the one or more image features from the LDR images 605. The LDR feature extractor 706 may output the one or more image features from the LDR images 605.

The apparatus may be configured to spatially align any misaligned or saturated image features from the LDR images 605 to one or more image features of the reference LDR image 605b by suppressing the misaligned or saturated image features. By spatially aligning any misaligned or saturated image features from the LDR images 605, the apparatus may be configured to generate spatially aligned misaligned or saturated image features 1101. In other words, the apparatus may be configured to spatially align the previously misaligned or saturated image features.

Referring to Figures 6 and 7, the LDR spatial attention module 707, of the LDR image processor 611, may be configured to receive the features from the LDR images 605. The LDR spatial attention module 707 may be configured to receive the features from the LDR images 605 from the LDR feature extractor 706. The LDR spatial attention module 707 may be configured to spatially align any misaligned or saturated image features from the LDR images 605 to one or more image features of the reference LDR 605b image by suppressing the misaligned or saturated image features. The LDR spatial attention module 707 may output the spatially aligned misaligned or saturated image features 1101.

The apparatus may also be configured to transform the two or more LDR images 605 to the linear domain 606 by means of a gamma-correction operation. Each of the two or more LDR images 605a, 605b, 605c may be transformed to the linear domain 606 by means of a gamma-correction operation to generate gamma-corrected LDR images 606a, 606b, 606c, as shown in Figures 6 and 7. The gamma correction may optimise the usage of bits when encoding the LDR images 605.

The gamma-correction module may be configured to receive the one or more LDR images 605. The gamma-correction module may be configured to generate gamma-corrected LDR images 606a, 606b, 606c. The gamma-correction module may be configured to output the gamma-corrected LDR images 606a, 606b, 606c.

The apparatus may be configured to extract one or more gamma-corrected image features from the gamma-corrected LDR images 606. The image features may comprise sections, regions, or characteristics of the gamma-corrected LDR images 606 descriptive of the well-exposed information present within each differently exposed LDR image, and extract temporal and spatial cues that are optimal for the HDR reconstruction stage 614. Additionally, or alternatively, the image features may comprise sections, or regions of the gamma-corrected LDR image 606 in which the features are of low or high saturation, the features move between gamma-corrected images 606a, 606b, 606c, or comprise other deformities.

The apparatus may be configured to extract one or more gamma-corrected image features from the gamma-corrected LDR images 606 by means of a neural network.

Referring to Figures 6 and 7, the LDR feature extractor 708, of the linear image processor 612, may be configured to receive the gamma-corrected LDR images 606. The LDR feature extractor 708 may be configured to extract the one or more image features from the gamma-corrected LDR images 606. The LDR feature extractor 708 may output the one or more image features from the gamma-corrected LDR images 606.

The apparatus may be configured to spatially align the one or more image features from the gamma-corrected LDR images 606 to one or more image features of the reference LDR image 605b. By spatially aligning the one or more image features from the gamma-corrected LDR images 606, the apparatus may be configured to generate spatially aligned gamma-corrected image features 1003.

Referring to Figures 6 and 7, the linear alignment module 709, of the linear image processor 612, may be configured to receive the features from the gamma-corrected LDR images 606. The linear alignment module 709 may be configured to receive the features from the gamma-corrected LDR images 606 from the LDR feature extractor 708. The linear alignment module 709 may be configured to spatially align the one or more image features from the gamma-corrected LDR images 606 to one or more image features of the reference LDR image 605b. The linear alignment module 709 may output the spatially aligned gamma-corrected image features 1003.

Referring to Figures 6 and 7, the event processor 609 may divide the simultaneously captured input event stream into chunks which correspond to the events acquired during the timestamps of the bracketed exposures (e.g. t0-t1, t1-t2, t2-t3), where t0 is the beginning of capture. The event processor 609 may extract features from the quantized input events using a neural network. The event features may then be spatially aligned to the event features at the reference timestamp (t2) using an event-feature alignment module 703.

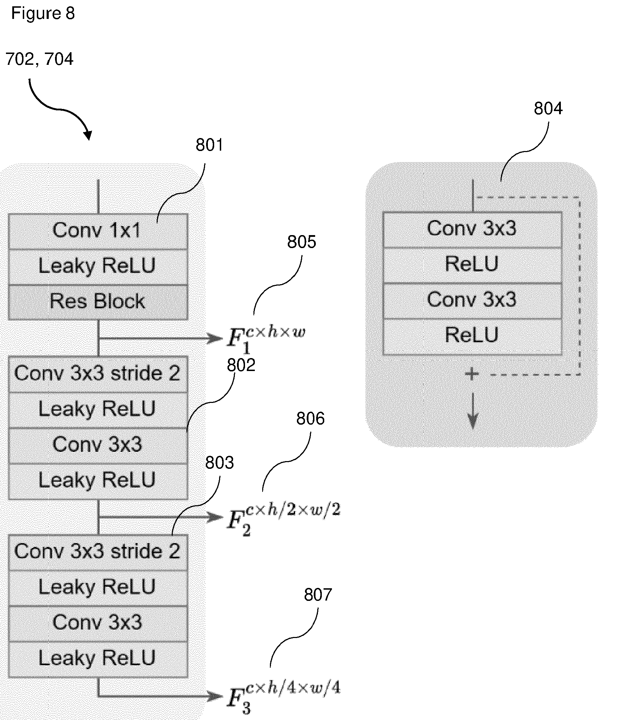

Figure 8 schematically illustrates the network design of an exemplary event feature extractor 702, 704. The event feature extractor 702, 704 may form part of, or be used for, the event processor 609 and/or the mixed-modality processor 610. In other words, both the event feature extractor 702 and the event feature extractor 704 may have the same structure, as described herein.

In summary, the event feature extractor 702, 704 may extract a pyramid of features, 805, 806, 807 at multiple scales using strided convolutions. A residual block 804 is used to improve training stability. Alternative feature extractors may be used. In other words, a different neural network architectures could be used. In some implementations, any method of extracting features from the input events can be used. In the exemplary event feature extractor 702, 704 network design shown in Figure 8, a simple series of convolutions, residual blocks, and strided convolutions 801, 802, 803 to extract a pyramid of feature maps 805, 806, 807 at different image scales.

The event feature extractor 702, 704 may receive an input stream of raw events from the event-based camera 601 and output a set of spatially aligned event-features aligned with the event-features at the reference timestamp. The event-feature alignment enables further exploitation of information from events that are not directly close to the reference time instance, which may enrich the feature representation.

Before the event features can be aligned, the first part of the event processor 609 computes features from the quantized events using an event feature extractor 702, 704.

In particular, the apparatus may be configured to extract one or more event features from the segments 602 of the event stream. The event features may comprise sections, or regions of the segments 602 of the event stream in which the features move between different segments 602a, 602b, 602c.

The apparatus may be configured to extract the one or more event features from the segments 602 of the event stream in dependence on the one or more image features from the LDR images 605. In other words, the location and/or characteristics of the image features from the LDR images 605 may be used to extract the one or more event features from the segments 602.

The apparatus may be configured to extract the one or more event features from the segments 602 of the event stream by means of a neural network. The neural network may be trained by the features of the LDR images 605 to extract the event features from the segments 602. In particular, the event feature extractor 704 in the mixed modality processor 610 may use the features of the LDR images 605 for training the extraction and the event feature extractor 702 in the event processor 609 may not use the features of the LDR images 605 for training the extraction.

The apparatus may also be configured to extract one or more further event features from the segments 602 of the event stream not in dependence on the one or more image features from the LDR images 605. In other words, the extraction of the further event features from the segments 602 of the event stream may not be taught by the image features from the LDR images 605. The apparatus may be configured to extract one or more further event features from the segments 602 of the event stream by means of a neural network that is not trained by the LDR images 605. In this way, the apparatus may generate further event features which have different characteristics and/or properties to the other event features. This may provide a broader range of event features to be used to generate the HDR image 607.

Referring to Figures 6 and 7, the event feature extractor 704, of the mixed modality processor 610, may be configured to receive the segments 602 of the event stream. The event feature extractor 704 may be configured to receive the segments 602 of the event stream from the event sampler 607 or directly from the event-based camera 601. The event feature extractor 704 may be configured to extract one or more event features from the segments 602 of the event stream. The event feature extractor 704 may output the event features from the segments 602 of the event stream.

Referring to Figures 6 and 7, the event feature extractor 702, of the event processor 609, may be configured to receive the segments 602 of the event stream. The event feature extractor 702 may be configured to receive the segments 602 of the event stream from the event-based camera 601. The event feature extractor 702 may be configured to extract one or more further event features from the segments 602 of the event stream. The event feature extractor 702 may output the further event features from the segments 602 of the event stream.

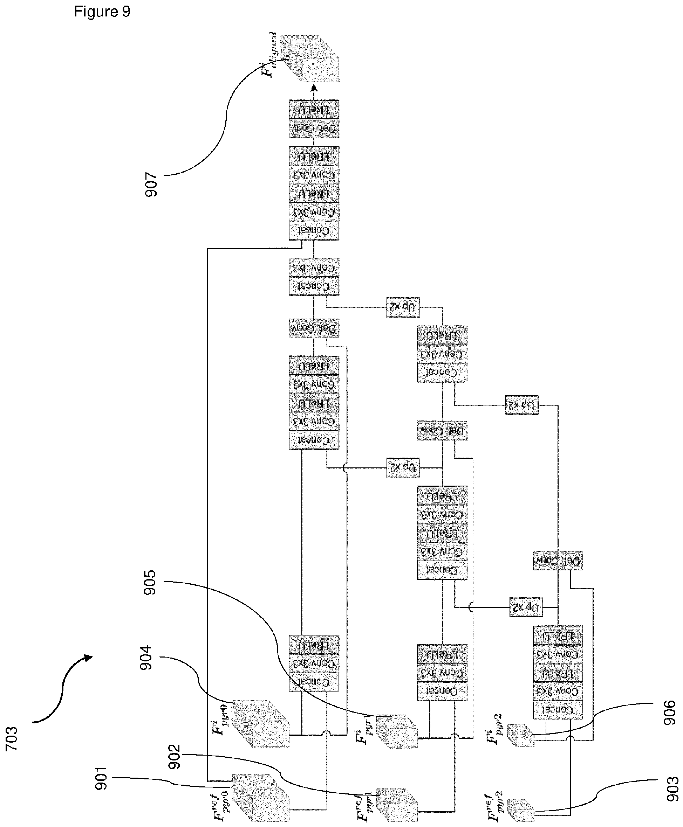

Figure 9 schematically illustrates the network design of an exemplary event alignment module 703. The event alignment module 703 may form part of the event processor 609. In summary, the event alignment module 703 may spatially align the extracted event features to the event features at the reference timestamp.

The event alignment module 703 may use deformable convolutions to perform spatial alignment at the feature level, where the input is a pyramid of multi-scale features. Other suitable implementations may use different feature alignment methods, such as optical flow.

In particular, as shown in Figure 9, the event alignment module 703 may use a pyramidal deformable convolution (PCD) to spatially align the features 901, 902, 903 at different scales. The inputs are a pyramid of the *i^{th}* set of event-features ( ${F}_{pyr 0}^{i} , {F}_{pyr 1}^{i} , {F}_{pyr 2}^{i}$) 901, 902, 903 and a pyramid of reference event-features ( ${F}_{pyr 0}^{ref} , {F}_{pyr 1}^{ref} , {F}_{pyr 2}^{ref}$) 904, 905, 906 to align to. Alternatively, for alignment, a different architecture could be used, for instance a lightweight optical flow-based alignment could be used instead. The aligned features 907 may be outputted by the alignment module 703.

The apparatus may be configured to spatially align the further event features 901, 902, 903 to one or more image features of the reference LDR image 605. In particular, the apparatus may be configured to spatially align the further event features 901, 902, 903, which are extracted from the segments of the event stream not in dependence on the one or more image features from the LDR images, to one or more image features of the reference LDR image.

Referring to Figures 6 and 7, the event alignment module 703, of the event processor 609, may be configured to receive the further event features 901, 902, 903. The event alignment module 703 may be configured to receive the further event features 901, 902, 903 from the event feature extractor 702. The event alignment module 703 may be configured to spatially align the further event features 901, 902, 903 to one or more image features of the reference LDR image 605. The event alignment module 703 may output the spatially aligned further event features.

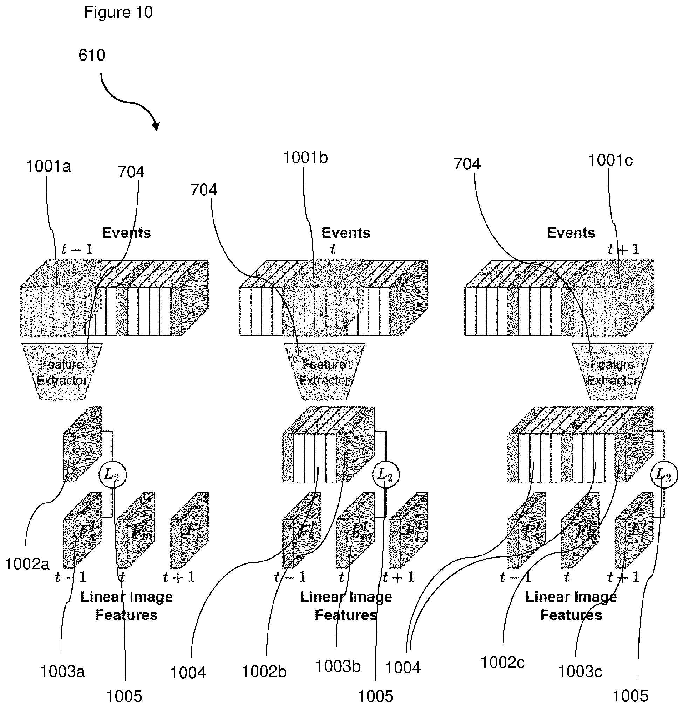

Figure 10 schematically illustrates the network design of an exemplary mixed-modality processor 610. The mixed-modality processor 610 may be configured to function in different HDR image apparatus. In other words, the mixed-modality processor 610 may be configured to function as a stand-alone pipeline.

In summary, the input event stream may be sampled with a sliding window 1001a, 1001b, 1001c corresponding to different timestamps along the event stream by an event sampler 607. An event feature extractor 704, such as a neural network, may be used to extract features 1002a, 1002b, 1002c from each subsample of events, thereby generating intermediate features 1004 in-between the LDR timestamps (t-1, t, t+1). A self-supervising L2 loss 1005 may be placed between the extracted event features 1002a, 1002b, 1002c and linear image features at the corresponding timestamps, as shown in Figure 10. This may encourage the network to translate the event features 1002a, 1002b, 1002c into the linear image feature domain 1003a, 1003b, 1003c.

A goal of the mixed-modality processor may be to transform sampled subsets of event features into the linear image feature domain. By transforming in-between subsets of events into the image-feature domain, this may enrich the feature representation of RGB images, both temporally and spatially.

The mixed-modality processor 610 may subsample the input event stream. This may use a simple sliding window 1001a, 1001b, 1001c over the input event stream, as shown in Figure 10. Alternative methods of extracting subsets of events may be used. The goal may be to extract more features 1004 in-between the LDR timestamps, which may increase the temporal resolution of input features resulting in both better spatial alignment and more input feature information.

The apparatus may be configured to subsample the segments 602 of the event stream. In particular, the apparatus may be configured to temporally subsample the segments 602 of the event stream. The subsampling may be carried out using the sliding window 1001a method, as shown in Figure 10.

Referring to Figures 6 and 7, the event sampler 607 may be configured to receive the segments 602 of the event stream. The event sampler 607 may be configured to receive the segments 602 of the event stream from the event-based camera 601. The event sampler 607 may be configured to subsample the segments 602 of the event stream. The event sampler 607 may output the subsamples of the segments 602 of the event stream.

The apparatus may be configured to extract the one or more event features from the subsamples 602 of the segments of the event stream. In particular, the apparatus may be configured to extract the one or more event features from the subsamples 602 of the segments of the event stream that are in the same feature space as the one or more image features from the LDR images. In other words, the extraction of the event features may be carried out such that the obtained event features are compatible with the image features. The extraction of the one or more event features may be carried out by the feature extractor 704, as shown in Figure 10.

The apparatus may be configured to transform the one or more event features into image features to generate event-based image features. In other words, the apparatus may be configured to take the event features and convert them into the image features.

The apparatus may also be configured to transform the event features that have been subsampled, such that the subsampled event features 1001a, 1001b, 1001c, are used to generate the event-based image features. In other words, the output of the event sampler 607, the subsampled event features 1001a, 1001b, 1001c, may be used by the mixed-modality processor 610 to generate the event-based image features.

The apparatus may be configured to transform the one or more event features into image features to generate event-based image features in dependence on the one or more image features from the LDR images 605. In other words, the LDR images 605, and the respective image features of the LDT images 605, may be used to generate the event-based image features. In particular, the apparatus may be configured to transform the one or more event features into image features to generate event-based image features in dependence on self-supervision from the one or more image features from the LDR images 605. The one or more image features from the LDR images 605 may be used to teach the mixed-modality module 610 how to transform the one or more event features into image features. The L2 loss 1005 may be used to compare the one or more image features from the LDR images 605 and the one or more event features and the L2 loss 1005 may then be used to transform the one or more event features into image features.

The apparatus may be configured to spatially align the event-based image features to one or more image features of the reference LDR image 605b to generate spatially aligned event-based image features 1002a, 1002b, 1002c.

Referring to Figures 6 and 7, the mixed-modality alignment module 705, of the mixed-modality module 610, may be configured to receive the event-based features. The mixed-modality alignment module 705 may be configured to receive the event-based features from the event feature extractor 704. The mixed-modality alignment module 705 may be configured to spatially align the event-based image features to one or more image features of the reference LDR image to generate spatially aligned event-based image features 1002a, 1002b, 1002c. The mixed-modality alignment module 705 may output the spatially aligned event-based image features 1002a, 1002b, 1002c.

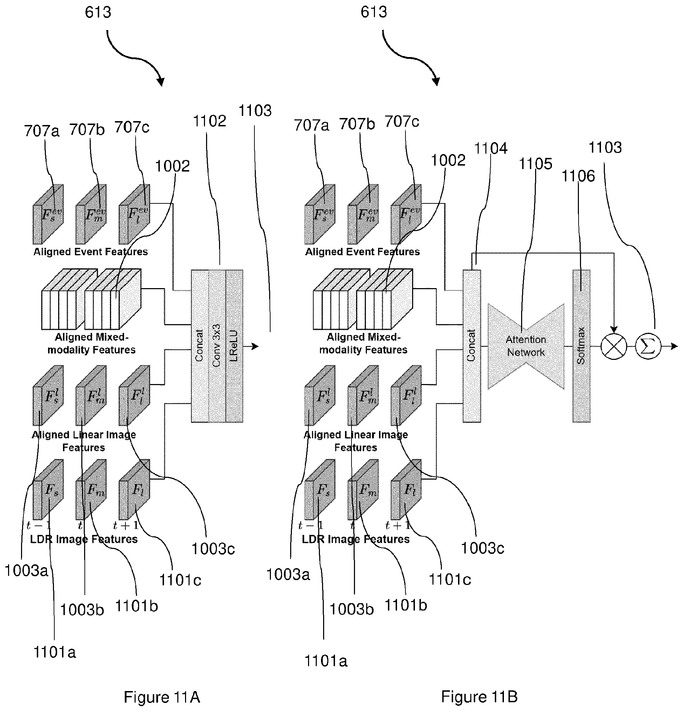

Figure 11A schematically illustrates the network design of a first exemplary feature fusion module. Figure 11B schematically illustrates the network design of a second exemplary feature fusion module.

In summary, the feature fusion module 613 may combine all the features from the input branches and performs fusion of features before passing into the HDR enhancement module 614.

In particular, the apparatus may be configured to combine the spatially aligned event-based image features 1002 with one or more of the spatially aligned further event features 707, the spatially aligned misaligned or saturated image features 1101, and the spatially aligned gamma-corrected image features 1003. In the exemplary fusion modules 613 shown in Figures 11A and 11B, the spatially aligned event-based image features 1002 are combined with all of the spatially aligned further event features 707, the spatially aligned misaligned or saturated image features 1101, and the spatially aligned gamma-corrected image features 1003. By combining all of the spatially aligned features, this may provide a wider range of inputs for the HDR image 607 to be generated from.

Referring to Figures 6 and 7, the feature fusion module 613 may be configured to receive the spatially aligned event-based image features 1002 and one or more of the spatially aligned further event features 707, the spatially aligned misaligned or saturated image features 1101, and the spatially aligned gamma-corrected image features 1003. The feature fusion module 613 may be configured to receive the spatially aligned event-based image features 1002 and one or more of the spatially aligned further event features 707, the spatially aligned misaligned or saturated image features 1101, and the spatially aligned gamma-corrected image features 1003 from the mixed-modality processor 610, the event processor 609, the LDR image processor 611 and the linear image processor 612, respectively. The feature fusion module 613 may be configured to combine the spatially aligned event-based image features 1002 with one or more of the spatially aligned further event features 707, the spatially aligned misaligned or saturated image features 1101, and the spatially aligned gamma-corrected image features 1003. The feature fusion module 613 may output the fused features 1103.

The first exemplary feature fusion module 613 may concatenates all the features and pass them through a convolution 1102 and activation function, as shown in Figure 11A.

The second exemplary feature fusion module 613 may use a more complicated attention averaging module to weight the contributions of each of the input features, as shown in Figure 11B. This may provide an improvement over the first exemplary feature fusion module 613. The second exemplary feature fusion module 613 may use an attention averaging module 1104 to weight the input features differently. The features are concatenated, passed through an attention network 1105 and Softmax function 1106 to generate weight maps for each input. These attention weight maps are multiplied by the inputs and summed together to perform a weighted averaging of features 1103.

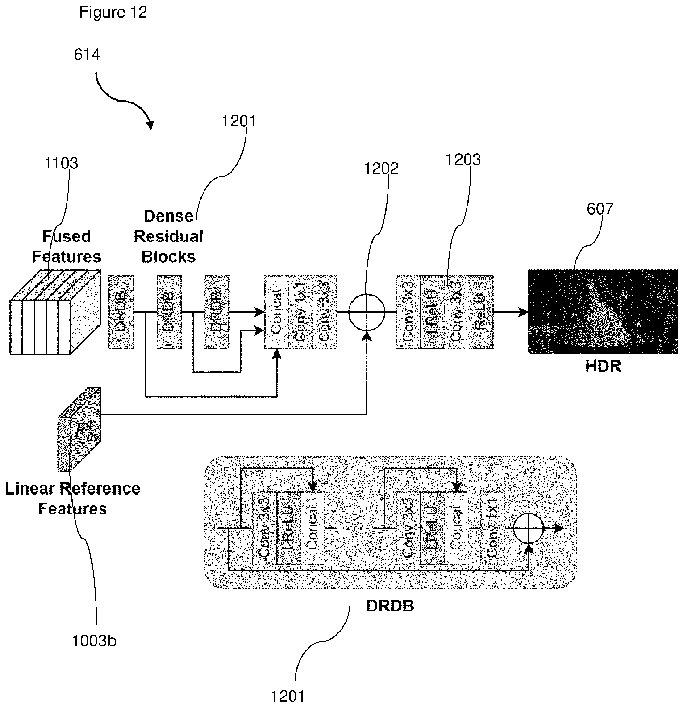

Figure 12 schematically illustrates the network design of an HDR enhancement module.

In summary, the fused features 1103 from the feature fusion module are passed through a series of dense residual blocks (DRDB) 1201. The linear image features corresponding to the reference image timestamp 1003b are added 1202 on to the output of the DRDBs 1201, before being passed through a final series of convolutions 1203 to predict the output HDR image 607.

The apparatus may be configured to generate an HDR image 607 in dependence on the spatially aligned event-based image features 1002. The apparatus may be configured to generate an HDR image 607 in dependence on fused features 1103. In particular, the apparatus may be configured to generate the HDR image 607 in dependence on the combination of the spatially aligned event-based image features 1002 with one or more of the spatially aligned further event features 707, the spatially aligned misaligned or saturated image features 1101, and the spatially aligned gamma-corrected image features 1003. In other words, the different types of spatially aligned features may be combined, or fused, and the fused features 1103 may be used to generate the HDR image 607. This may enable the HDR enhancement module 614 to reconstruct the LDR images 605 into an HDR image 607.

In some implementations, as shown in Figure 7 and 12, the apparatus may be configured to generate an HDR image 607 in dependence on fused features 1103 and the linear reference features 1003b. This may enable to the HDR reconstruction, or estimation, to be calibrated to the linear reference features 1003b.

Referring to Figures 6 and 7, the HDR enhancement module 614 may be configured to receive the fused features 1103. The HDR enhancement module 614 may be configured to receive the fused features 1103 from the feature fusion module 613. The HDR enhancement module 614 may be configured to generate the HDR image 607 in dependence on the combination of the spatially aligned event-based image features 1002 with one or more of the spatially aligned further event features 707, the spatially aligned misaligned or saturated image features 1101, and the spatially aligned gamma-corrected image features 1003. The HDR enhancement module 614 may output the HDR image.

The combination of the modules in the pipeline 600 may provide superior HDR quality (i.e. higher PSNR values).

The advantage of this present system may be that it exploits the benefits of two separate input modalities: bracketed exposures and events. The event data may provide: high temporal resolution (~10 µs), high dynamic range (~140 dB), and low power. The bracketed exposures may provide: high spatial resolution (1080p/4K and greater), RGB colour, high quality optics, and fine detail.

The present system may provide a number of advantages over existing methods: the system may leverage information from two complimentary modalities: bracketed exposures and events, the system may leverage content from events in regions which may be under- or over-exposed in the input LDR frames, the system may handle larger degrees of motion between bracketed exposures, the system may significantly reduce ghosting/edge artefacts by exploiting the higher temporal resolution of the event-based camera, and the system may prevent the failure case of event-HDR methods when there is no event signal (no motion) by being able to resort to bracketed exposure-HDR which still performs well.

To train the pipeline 600, the whole HDR reconstruction network may be trained end-to-end. This training may include the event processor 609 and mixed-modality processor 610. During a backward pass of a first-order iterative optimization algorithm, the gradients may be computed with respect to the learnable weights of all modules. Additionally, the mixed-modality module 610 may be trained with self-supervision on the extracted features, as described herein with regards to Figure 10. However, the gradients from the self-supervising loss in the mixed-modality module 610 may only be backpropagated through the event branch so as not to update the weights of the image feature extractor 706, 708.

The training may minimize the pixel-wise reconstruction loss (L1 loss) between the tonemapped predicted image 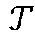 (*Ĥ*) and the tonemapped ground truth 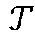 (*H*) through Equation 3: $L = {\left‖T\left(\hat{H}\right)-T\left(H\right)\right‖}_{1}$

The tonemapping operator is defined in Equation 4: $T \left(H\right) = \frac{log \left(1+μH\right)}{log \left(1+μ\right)}$

A self-supervising L2 loss on the mixed-modality features may also be used, as shown in Figure 10.

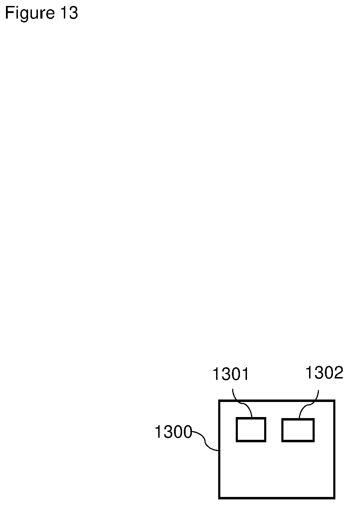

An example of an apparatus 1300 configured to implement the methods described herein is schematically illustrated in Figure 13.

The apparatus 1300 may be implemented on an electronic device, such as a laptop, tablet, smart phone or TV. In other words, a computing apparatus may comprise the imaging apparatus 1300.

The computing apparatus may comprise frame-based camera and an event-based camera. In this way, the computing apparatus may be configured to obtain LDR images 605 and an event stream 601. The frame-based camera may capture the LDR images 605. The event-based camera may capture the event stream 601.

The computing apparatus may comprise a cloud server. In other words, the imaging apparatus 1300 may be configured to run remotely on a server.

The apparatus 1300 comprises a processor 1301 configured to process the datasets in the manner described herein. For example, the processor 1301 may be implemented as a computer program running on a programmable device such as a Central Processing Unit (CPU). The apparatus 1300 comprises a memory 1302 which is arranged to communicate with the processor 1301. Memory 1302 may be a nonvolatile memory. The processor 1301 may also comprise a cache (not shown in Figure 13), which may be used to temporarily store data from memory 1302. The apparatus 1300 may comprise more than one processor 1301 and more than one memory 1302. The memory 1302 may store data that is executable by the processor 1301. The processor 1301 may be configured to operate in accordance with a computer program stored in non-transitory form on a machine-readable storage medium. The computer program may store instructions for causing the processor 1301 to perform its methods in the manner described herein.

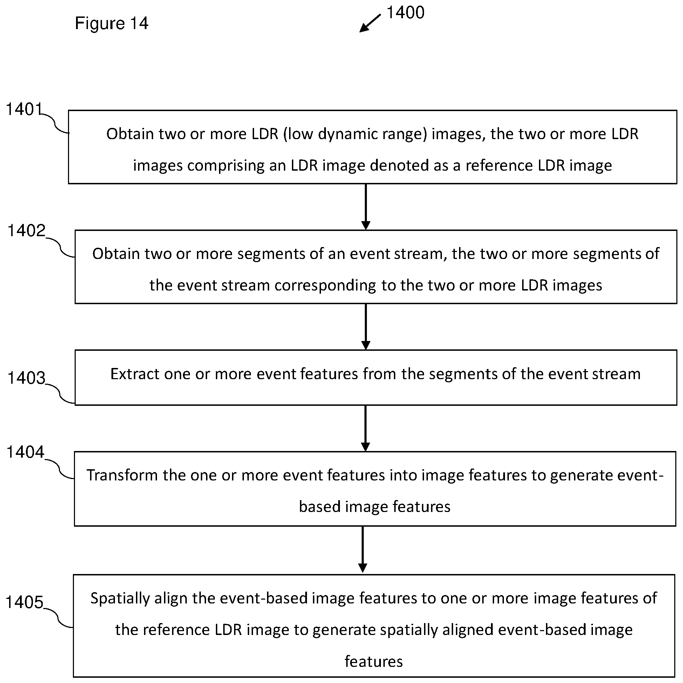

Figure 14 summarises an example of a method 1400 for generating spatially aligned event-based image features. At step 1401, the method 1400 comprises obtaining two or more LDR (low dynamic range) images, the two or more LDR images comprising a reference LDR image. At step 1402, the method 1400 comprises obtaining two or more segments of an event stream, the two or more segments of the event stream corresponding to the two or more LDR images. At step 1403, the method 1400 comprises extracting one or more event features from the segments of the event stream. At step 1404, the method 1400 comprises transforming the one or more event features into image features to generate event-based image features. At step 1405, the method 1400 comprises spatially aligning the event-based image features to one or more image features of the reference LDR image to generate spatially aligned event-based image features.

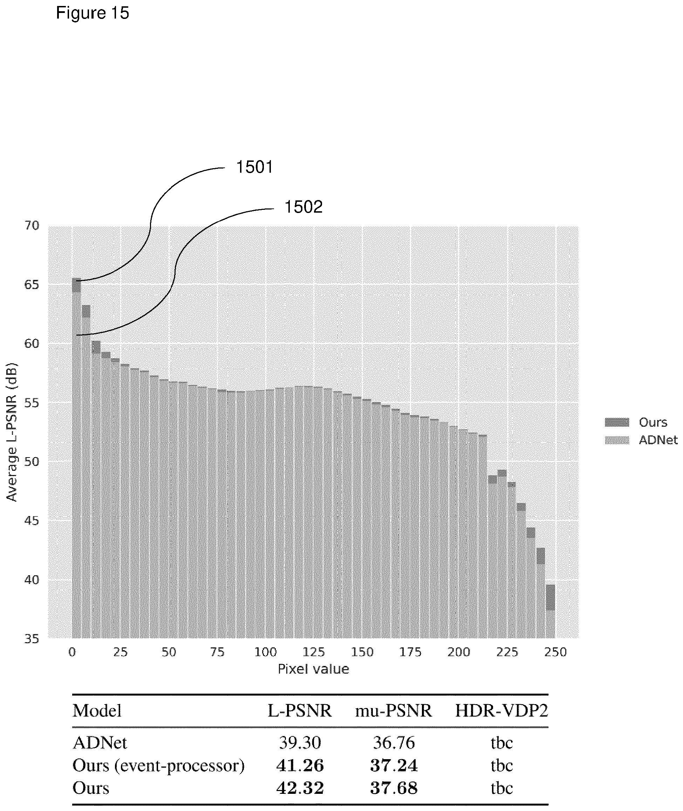

Figure 15 illustrates the quantitative results of a HdM HDR dataset for the present system compared to the prior art.

In Figure 15, the results of the present system 1501, using both bracketed exposure images and events, are quantitively compared to a state-of-the-art bracketed exposure only HDR method (ADNet) 1502. The table in Figure 15 also compares the results of using the present system with just the event processor compared to the whole pipeline (event processor + mixed-modality processor). The PSNR results are in both the linear (L-PSNR) and tonemapped (mu-PSNR) domains. It can be seen that the present system, including the complete pipeline, improves upon ADNet with an increase of over +3 dB L-PSNR and almost +1 dB mu-PSNR.

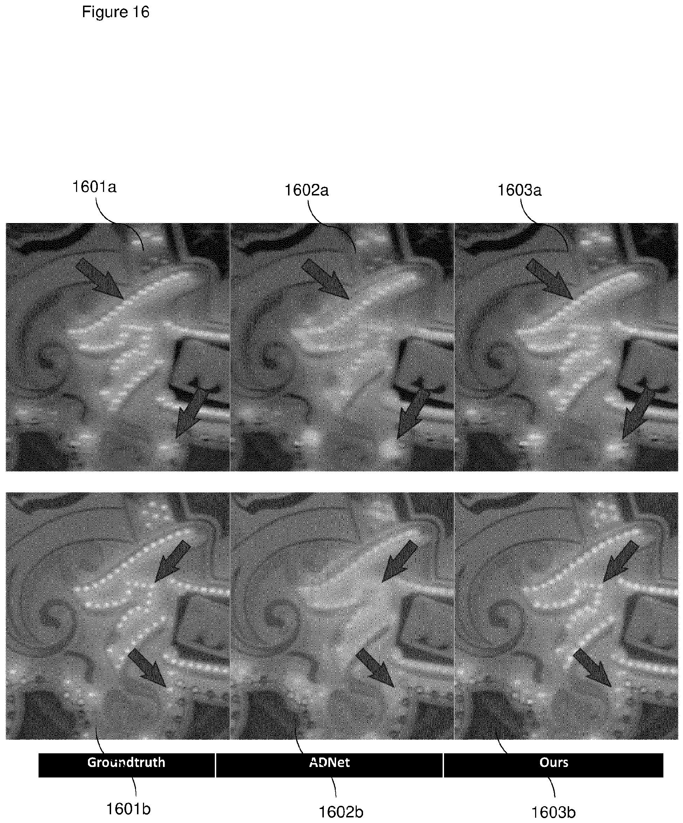

Figure 16 illustrates the qualitative results of a HdM HDR dataset for the present system compared to the prior art and ground truth. A first image 1601a and a second image 1601b are used for the comparison.

In Figure 16, the output HDR images of the present system 1603a, 1603b, using both bracketed exposure images and events, are qualitatively compared to a state-of-the-art bracketed exposure only HDR method (ADNet) images 1602a, 1602b and the groundtruth images 1601a, 1601b. It can be seen that the output HDR image of present system 1603a, 1603b is closer to the groundtruth image 1601a, 1602b than the state-of-the-art bracketed exposure only HDR method (ADNet) images 1602a, 1602b.

## Claims

1. An imaging apparatus (1300), the apparatus (1300) comprising one or more processors (1301) and a memory (1302) storing in non-transient form data defining program code executable by the one or more processors (1301), wherein the program code, when executed by the one or more processors (1301), causes the apparatus (1300) to implement a neural network pipeline to:
obtain two or more low dynamic range, LDR, images (605), the two or more LDR images (605) comprising an LDR image denoted as a reference LDR image (605b), wherein the two or more LDR images (605) are each captured using different bracketed exposure levels;
obtain two or more segments (602) of an event stream captured by an event-based camera at the same time as the two or more LDR images (605) were captured, the two or more segments (602) of the event stream corresponding to the two or more LDR images (605);
extract one or more image features from the LDR images (605);
extract one or more event features from the segments (602) of the event stream in dependence on the one or more image features from the LDR images (605);
transform the one or more event features into image features to generate event-based image features;
spatially align the event-based image features to one or more image features of the reference LDR image (605b) to generate spatially aligned event-based image features (1002); and
generate an HDR image (607) in dependence on the spatially aligned event-based image features (1002) and one or more image features from the LDR images (605).

2. The apparatus (1300) according to claim 1, wherein the apparatus (1300) is configured to transform the one or more event features into image features to generate event-based image features in dependence on the one or more image features from the LDR images (605).

3. The apparatus (1300) according to claim 2, wherein the apparatus (1300) is configured to transform the one or more event features into image features to generate event-based image features in dependence on self-supervision from the one or more image features from the LDR images (605).

4. The apparatus (1300) according to any preceding claim, wherein the apparatus (1300) is configured to extract the one or more event features from the segments (602) of the event stream by means of a neural network.

5. The apparatus (1300) accor ding to any preceding claim, wherein the apparatus (1300) is configured to temporally subsample the segments (602) of the event stream.

6. The apparatus (1300) according to claim 5 when dependent on claim 1, wherein the apparatus (1300) is configured to extract the one or more event features from the subsamples of the segments (602) of the event stream that are in the same feature space as the one or more image features from the LDR images (605).

7. The apparatus (1300) according to any preceding claim, wherein the apparatus (1300) is configured to extract one or more further event features from the segments (602) of the event stream not in dependence on the one or more image features from the LDR images (605) and spatially align the further event features to one or more image features of the reference LDR image (605).

8. The apparatus (1300) according to any preceding claim, wherein the apparatus (1300) is configured to obtain the event stream and wherein the apparatus is configured to generate the two or more segments (602) of the event stream by converting the event stream into two or more voxel grids.

9. The apparatus (1300) according to any of claims 1 to 8, wherein the apparatus (1300) is configured to extract the one or more image features from the LDR images (605) by means of a neural network.

10. A computer implemented method (1400) for imaging, the method (1400) comprising a neural network pipeline:
obtaining two or more low dynamic range, LDR, images, the two or more LDR images comprising a reference LDR image (1401), wherein the two or more LDR images are each captured using different bracketed exposure levels;
obtaining two or more segments of an event stream captured by an event-based camera at the same time as the two or more LDR images were captured, the two or more segments of the event stream corresponding to the two or more LDR images (1402);
extracting one or more image features from the LDR images;
extracting one or more event features from the segments of the event stream (1403) in dependence on the one or more image features from the LDR images;
transforming the one or more event features into image features to generate event-based image features (1404);
spatially aligning the event-based image features to one or more image features of the reference LDR image (1405) to generate spatially aligned event-based image features; and
generating an HDR image in dependence on the spatially aligned event-based image features (1002) and one or more image features from the LDR images (605).

11. A computer program product comprising computer program instructions that when executed by a processing apparatus cause the processing apparatus to perform the method according to claim 10.

12. A non-transitory computer-readable medium storing computer instructions for imaging, that when executed by one or more processors, cause the one or more processors to perform the method of claim 10.

## Patentansprüche

1. Bildgebungseinrichtung (1300), wobei die Einrichtung (1300) einen oder mehrere Prozessoren (1301) und einen Speicher (1302), der in nichtflüchtiger Form Daten speichert, die einen Programmcode definieren, der durch den einen oder die mehreren Prozessoren (1301) ausführbar ist, umfasst, wobei der Programmcode, wenn er durch den einen oder die mehreren Prozessoren (1301) ausgeführt wird, die Einrichtung (1300) veranlasst, eine neuronale Netzwerk-Pipeline zu implementieren, zum:
Erhalten von zwei oder mehreren Bildern (605) mit niedrigem Dynamikbereich, LDR, wobei die zwei oder die mehreren LDR-Bilder (605) ein LDR-Bild, das als ein Referenz-LDR-Bild (605b) bezeichnet wird, umfassen, wobei die zwei oder die mehreren LDR-Bilder (605) jeweils unter Verwendung unterschiedlicher Belichtungsreihenstärken aufgenommen werden;
Erhalten von zwei oder mehreren Segmenten (602) eines Ereignisstroms, der durch eine ereignisbasierte Kamera zu der gleichen Zeit, zu der die zwei oder die mehreren LDR-Bilder (605) aufgenommen werden, aufgenommen wird, wobei die zwei oder die mehreren Segmente (602) des Ereignisstroms den zwei oder den mehreren LDR-Bildern (605) entsprechen;
Extrahieren eines oder mehrerer Bildmerkmale aus den LDR-Bildern (605);
Extrahieren eines oder mehrerer Ereignismerkmale aus den Segmenten (602) des Ereignisstroms in Abhängigkeit von dem einen oder den mehreren Bildmerkmalen aus den LDR-Bildern (605);
Transformieren des einen oder der mehreren Ereignismerkmale in Bildmerkmale, um ereignisbasierte Bildmerkmale zu erzeugen;
räumlichen Ausrichten der ereignisbasierten Bildmerkmale an einem oder mehreren Bildmerkmalen des Referenz-LDR-Bildes (605b), um räumlich ausgerichtete ereignisbasierte Bildmerkmale (1002) zu erzeugen;
und
Erzeugen eines HDR-Bildes (607) in Abhängigkeit von den räumlich ausgerichteten ereignisbasierten Bildmerkmalen (1002) und einem oder mehreren Bildmerkmalen aus den LDR-Bildern (605).

2. Einrichtung (1300) nach Anspruch 1, wobei die Einrichtung (1300) konfiguriert ist, um das eine oder die mehreren Ereignismerkmale in Bildmerkmale zu transformieren, um ereignisbasierte Bildmerkmale in Abhängigkeit von dem einen oder den mehreren Bildmerkmalen aus den LDR-Bildern (605) zu erzeugen.

3. Einrichtung (1300) nach Anspruch 2, wobei die Einrichtung (1300) konfiguriert ist, um das eine oder die mehreren Ereignismerkmale in Bildmerkmale zu transformieren, um ereignisbasierte Bildmerkmale in Abhängigkeit von einer Selbstüberwachung aus dem einen oder den mehreren Bildmerkmalen aus den LDR-Bildern (605) zu erzeugen.

4. Einrichtung (1300) nach einem der vorstehenden Ansprüche, wobei die Einrichtung (1300) konfiguriert ist, um das eine oder die mehreren Ereignismerkmale aus den Segmenten (602) des Ereignisstroms mittels eines neuronalen Netzwerks zu extrahieren.

5. Einrichtung (1300) nach einem der vorstehenden Ansprüche, wobei die Einrichtung (1300) konfiguriert ist, um die Segmente (602) des Ereignisstroms zeitlich unterabzutasten.

6. Einrichtung (1300) nach Anspruch 5, wenn abhängig von Anspruch 1, wobei die Einrichtung (1300) konfiguriert ist, um das eine oder die mehreren Ereignismerkmale aus den Unterabtastungen der Segmente (602) des Ereignisstroms, die sich in dem gleichen Merkmalsraum wie das eine oder die mehreren Bildmerkmale aus den LDR-Bildern (605) befinden, zu extrahieren.

7. Einrichtung (1300) nach einem der vorstehenden Ansprüche, wobei die Einrichtung (1300) konfiguriert ist, um ein oder mehrere weitere Ereignismerkmale aus den Segmenten (602) des Ereignisstroms nicht in Abhängigkeit von dem einen oder den mehreren Bildmerkmalen aus den LDR-Bildern (605) zu extrahieren und die weiteren Ereignismerkmale an einem oder mehreren Bildmerkmalen des Referenz-LDR-Bildes (605) räumlich auszurichten.

8. Einrichtung (1300) nach einem der vorstehenden Ansprüche, wobei die Einrichtung (1300) konfiguriert ist, um den Ereignisstrom zu erhalten, und wobei die Einrichtung konfiguriert ist, um die zwei oder die mehreren Segmente (602) des Ereignisstroms durch ein Umwandeln des Ereignisstroms in zwei oder mehrere Voxelgitter zu erzeugen.

9. Einrichtung (1300) nach einem der Ansprüche 1 bis 8, wobei die Einrichtung (1300) konfiguriert ist, um das eine oder die mehreren Bildmerkmale aus den LDR-Bildern (605) mittels eines neuronalen Netzwerks zu extrahieren.

10. Computerimplementiertes Verfahren (1400) zum Bildgeben, wobei das Verfahren (1400) eine neuronale Netzwerk-Pipeline umfasst:
Erhalten von zwei oder mehreren Bildern mit niedrigem Dynamikbereich, LDR, wobei die zwei oder die mehreren LDR-Bilder ein Referenz-LDR-Bild (1401) umfassen, wobei die zwei oder die mehreren LDR-Bilder jeweils unter Verwendung unterschiedlicher Belichtungsreihenstärken aufgenommen werden;
Erhalten von zwei oder mehreren Segmenten eines Ereignisstroms, der durch eine ereignisbasierte Kamera zu der gleichen Zeit, zu der die zwei oder die mehreren LDR-Bilder aufgenommen werden, aufgenommen wird, wobei die zwei oder die mehreren Segmente des Ereignisstroms den zwei oder den mehreren LDR-Bildern (1402) entsprechen;
Extrahieren eines oder mehrerer Bildmerkmale aus den LDR-Bildern;
Extrahieren eines oder mehrerer Ereignismerkmale aus den Segmenten des Ereignisstroms (1403) in Abhängigkeit von dem einen oder den mehreren Bildmerkmalen aus den LDR-Bildern;
Transformieren des einen oder der mehreren Ereignismerkmale in Bildmerkmale, um ereignisbasierte Bildmerkmale (1404) zu erzeugen;
räumliches Ausrichten der ereignisbasierten Bildmerkmale an einem oder mehreren Bildmerkmalen des Referenz-LDR-Bildes (1405), um räumlich ausgerichtete ereignisbasierte Bildmerkmale zu erzeugen;
und
Erzeugen eines HDR-Bildes in Abhängigkeit von den räumlich ausgerichteten ereignisbasierten Bildmerkmalen (1002) und einem oder mehreren Bildmerkmalen aus den LDR-Bildern (605).

11. Computerprogrammprodukt, das Computerprogrammanweisungen, die, wenn sie durch eine Verarbeitungseinrichtung ausgeführt werden, die Verarbeitungseinrichtung veranlassen, das Verfahren nach Anspruch 10 durchzuführen, umfasst.

12. Nichtflüchtiges computerlesbares Medium, das Computeranweisungen zum Bildgeben, die, wenn sie durch einen oder mehrere Prozessoren ausgeführt werden, den einen oder die mehreren Prozessoren veranlassen, das Verfahren nach Anspruch 10 durchzuführen, speichert.

## Revendications

1. Appareil d'imagerie (1300), l'appareil (1300) comprenant un ou plusieurs processeurs (1301) et une mémoire (1302) stockant sous forme non transitoire des données définissant un code de programme exécutable par le ou les processeurs (1301), dans lequel le code de programme, lorsqu'il est exécuté par le ou les processeurs (1301), amène l'appareil (1300) à mettre en œuvre un pipeline de réseau neuronal pour :
obtenir deux images à faible gamme dynamique, LDR, ou plus (605), les deux images LDR ou plus (605) comprenant une image LDR désignée comme image LDR de référence (605b), dans lequel les deux images LDR ou plus (605) sont chacune capturées à l'aide de niveaux d'exposition différents entre parenthèses ;
obtenir deux segments ou plus (602) d'un flux d'événements capturés par une caméra basée sur un événement en même temps que les deux images LDR ou plus (605) ont été capturées, les deux segments ou plus (602) du flux d'événements correspondant aux deux images LDR ou plus (605) ;
extraire une ou plusieurs caractéristiques d'image des images LDR (605) ;
extraire une ou plusieurs caractéristiques d'événement des segments (602) du flux d'événements en fonction de la ou des caractéristiques d'image provenant des images LDR (605) ;
transformer la ou les caractéristiques d'événement en caractéristiques d'image pour générer des caractéristiques d'image basées sur un événement ;
aligner spatialement les caractéristiques d'image basées sur un événement sur une ou plusieurs caractéristiques d'image de l'image LDR de référence (605b) pour générer des caractéristiques d'image basées sur un événement alignées spatialement (1002) ; et
générer une image HDR (607) en fonction des caractéristiques d'image basées sur un événement spatialement alignées (1002) et d'une ou de plusieurs caractéristiques d'image provenant des images LDR (605).

2. Appareil (1300) selon la revendication 1, dans lequel l'appareil (1300) est configuré pour transformer la ou les caractéristiques d'événement en caractéristiques d'image afin de générer des caractéristiques d'image basées sur un événement en fonction de la ou des caractéristiques d'image provenant des images LDR (605).

3. Appareil (1300) selon la revendication 2, dans lequel l'appareil (1300) est configuré pour transformer la ou les caractéristiques d'événement en caractéristiques d'image afin de générer des caractéristiques d'image basées sur un événement en fonction d'une auto-surveillance à partir de la ou des caractéristiques d'image provenant des images LDR (605).

4. Appareil (1300) selon l'une quelconque revendication précédente, dans lequel l'appareil (1300) est configuré pour extraire la ou les caractéristiques d'événement des segments (602) du flux d'événements au moyen d'un réseau neuronal.

5. Appareil (1300) selon l'une quelconque revendication précédente, dans lequel l'appareil (1300) est configuré pour sous-échantillonner temporellement les segments (602) du flux d'événements.

6. Appareil (1300) selon la revendication 5 lorsqu'elle dépend de la revendication 1, dans lequel l'appareil (1300) est configuré pour extraire la ou les caractéristiques d'événement des sous-échantillons des segments (602) du flux d'événements qui sont dans le même espace de caractéristiques que la ou les caractéristiques d'image provenant des images LDR (605).

7. Appareil (1300) selon l'une quelconque revendication précédente, dans lequel l'appareil (1300) est configuré pour extraire une ou des caractéristiques d'événement supplémentaires des segments (602) du flux d'événements sans dépendre de la ou des caractéristiques d'image des images LDR (605) et aligner spatialement les caractéristiques d'événement supplémentaires sur une ou des caractéristiques d'image de l'image LDR de référence (605).

8. Appareil (1300) selon l'une quelconque revendication précédente, dans lequel l'appareil (1300) est configuré pour obtenir le flux d'événements et dans lequel l'appareil est configuré pour générer les deux segments ou plus (602) du flux d'événements en convertissant ce dernier en deux grilles de voxels ou plus.

9. Appareil (1300) selon l'une quelconque des revendications 1 à 8, dans lequel l'appareil (1300) est configuré pour extraire la ou les caractéristiques d'image des images LDR (605) au moyen d'un réseau neuronal.

10. Procédé mis en œuvre par ordinateur (1400) destiné à une imagerie, le procédé (1400) comprenant un pipeline de réseau neuronal :
l'obtention de deux images à faible gamme dynamique, LDR, ou plus, les deux images LDR ou plus comprenant une image LDR de référence (1401), dans lequel les deux images LDR ou plus sont chacune capturées à l'aide de niveaux d'exposition différents entre parenthèses ;
l'obtention de deux segments ou plus d'un flux d'événements capturés par une caméra basée sur un événement en même temps que les deux images LDR ou plus ont été capturées, les deux segments ou plus du flux d'événements correspondant aux deux images LDR ou plus (1402) ;
l'extraction d'une ou de plusieurs caractéristiques d'image des images LDR ;
l'extraction d'une ou de plusieurs caractéristiques d'événement des segments du flux d'événements (1403) en fonction de la ou des caractéristiques d'image provenant des images LDR ;
la transformation de la ou des caractéristiques d'événement en caractéristiques d'image pour générer des caractéristiques d'image basées sur un événement (1404) ;
l'alignement spatial des caractéristiques d'image basées sur un événement sur une ou des caractéristiques d'image de l'image LDR de référence (1405) pour générer des caractéristiques d'image basées sur un événement alignées spatialement ; et
la génération d'une image HDR en fonction des caractéristiques d'image basées sur un événement (1002) alignées spatialement et d'une ou de plusieurs caractéristiques d'image provenant des images LDR (605).

11. Produit-programme d'ordinateur comprenant des instructions de programme informatique qui, lorsqu'elles sont exécutées par un appareil de traitement, amènent l'appareil de traitement à réaliser le procédé selon la revendication 10.

12. Support non transitoire lisible par ordinateur stockant des instructions informatiques destinées à une imagerie, qui, lorsqu'elles sont exécutées par un ou des processeurs, amènent le ou les processeurs à réaliser le procédé selon la revendication 10.
